# EUROPEAN PATENT APPLICATION

(11) **EP 4 813 588 A1**
(43) Date of publication of application: **30.09.2026**
(21) Application number: 23959512.7
(22) Date of filing: 20.11.2023
(51) Int. Cl.: B25J 19/00, B25J 5/00, B08B 15/04

(54) **DOCKING STATION, MOBILE ROBOT, AND APPARATUS COMPRISING SAME**

(71) Applicant: Bear Robotics Korea, Inc., Seoul 04779 (KR)
(72) Inventor: LEE, Haklim, Seoul 06772 (KR)
(74) Representative: Murgitroyd & Company
(86) International application number: PCT/KR2023/018619
(87) International publication number: WO 2025/110255

(57) **Abstract**

Embodiments of the present disclosure provide a docking station, a mobile robot, and an apparatus comprising same which enable removal of dust inside the mobile robot by sucking in air by means of a dust-collecting motor of the docking station, with a dust-collecting flow path tube of the docking station connected to an air flow path tube of the mobile robot.

## Description

### TECHNICAL FIELD

The present disclosure relates to a docking station, a mobile robot, and an apparatus including the same, in which dust inside the mobile robot is removed while the mobile robot is docked with the docking station.

### BACKGROUND ART

To take charge of a portion of factory automation, robots have been developed for industrial use. Recently, the application range of robots has been further expanded, and robots that can be used in daily life as well as medical robots and aerospace robots are being developed.

Among industrial robots, robots that perform precise assembly work repeatedly perform the same operations and repeat the operations without encountering unexpected situations at a predetermined position, so that automation using the robots has been proceeded.

However, a transportation area including a traveling area (i.e., a driving area) where occurrence or non-occurrence of unexpected situations can be determined, has not yet been actively commercialized with robots. However, recently, as performance of sensors that recognize the surroundings has improved and computer technology that can quickly process the recognized information has evolved, the number of driving robots has rapidly increased.

Industrially, robots that are in charge of transportation functions have attracted attention and competition in robot technology is intensifying day by day. In addition to robots that transport large or large quantities of goods, there is a need for robots that provide services for transporting small goods to their destinations.

Meanwhile, a robot includes a control box in which various electronic components, including a main board, are mounted. In general, the control box includes a blower in order to cool an internal space thereof by dissipating heat generated from the various electronic components mounted therein. In addition, a convection scheme for cooling the internal space of the control box using the blower is employed.

However, the cooling scheme using the aforementioned blower causes a large amount of air to be introduced from the outside. Accordingly, in logistics environments in which robots are extensively used, a large amount of dust is inevitably introduced into the robots. In addition, accumulation of dust in the robot may eventually lead to electrical short circuit of electronic components. This causes an error during operation of the robot, resulting in damage to the robot.

Accordingly, there is a need for a technique for efficiently removing dust in order to prevent accumulation of dust in a robot.

### DISCLOSURE

### TECHNICAL PROBLEM

The present disclosure provides a docking station, a mobile robot, and an apparatus including the same. More particularly, an aspect of the present disclosure is to provide a docking station, a mobile robot, and an apparatus including the same, in which dust inside the mobile robot may be removed by drawing air through a dust collection motor of the docking station in a state in which a dust collection conduit of the docking station is coupled to an air flow conduit of the mobile robot.

In addition, an aspect of the present disclosure is to provide a docking station, a mobile robot, and an apparatus including the same, in which air purification may be performed by collecting dust from drawn air using a dust collection filter and discharging air from which dust has been removed to the outside through a dust collection motor.

The aspects of the present disclosure are not limited to those mentioned above, and other aspects not mentioned herein will be clearly understood by those skilled in the art from the following description.

### TECHNICAL SOLUTIONS

A docking station configured to collect dust from the inside of a mobile robot while the mobile robot is docked with the docking station includes a housing, a dust collection conduit formed on the front surface of the housing so as to be coupled to an air flow conduit positioned in the mobile robot, a dust collection motor positioned in the housing and configured to draw air from the inside of the mobile robot through the air flow conduit and the dust collection conduit, and a dust collection filter surrounding the dust collection motor and configured to collect dust from the drawn air.

The docking station may include an outlet formed in the upper surface of the housing, through which air with dust removed by the dust collection filter is discharged, and the dust collection motor may discharge the air with dust removed through the outlet.

The dust collection filter may include a high-efficiency particulate air (HEPA) filter containing activated carbon.

The docking station may include a charging port formed on the front surface of the housing so as to be coupled to a charging terminal formed on the front surface of the mobile robot and a restraining plate formed at a lower portion of the housing and configured to prevent movement of the mobile robot while the charging terminal and the charging port are coupled.

A mobile robot configured to be docked with a docking station in order to discharge dust from the inside of the mobile robot includes a body including a traveling unit, a control box positioned in the body and having electronic components mounted therein and a plurality of holes formed in the front surface thereof, and an air flow conduit positioned between the front surface of the body and the front surface of the control box so as to be movable in a forward-backward direction. The air flow conduit moves backward when one end of the air flow conduit is coupled to a dust collection conduit positioned on the front surface of the docking station, such that the other end of the air flow conduit is brought into close contact with the front surface of the control box.

The mobile robot may include a first guide pin protruding from an edge of the front surface of the control box and an elastic member positioned on the first guide pin. The air flow conduit may include a first guide hole formed in the other end thereof, into which the first guide pin is inserted and with which the elastic member is in contact.

The air flow conduit may include a rubber member formed along a circumference of the other end thereof.

The body may include a support bracket configured to support a lower portion of the air flow conduit to prevent movement of the air flow conduit in a leftward-rightward direction perpendicular to the forward-backward direction.

The support bracket may include a second guide hole formed therein in the forward-backward direction, and the air flow conduit may include a second guide pin formed on the lower portion thereof and inserted into the second guide hole.

The other end of the air flow conduit may have a larger width than one end of the air flow conduit.

The mobile robot may include at least one blower positioned on the front surface of the control box.

The body may include a charging terminal formed on the front surface thereof so as to be coupled to a charging port positioned on the front surface of the docking station, and may be prevented from moving by a restraining plate positioned at a lower portion of the docking station while the charging port and the charging terminal are coupled.

An apparatus configured to remove dust from the inside of a mobile robot while the mobile robot is docked with a docking station includes an air flow conduit positioned in the mobile robot, a dust collection conduit positioned on the front surface of the docking station so as to be coupled to the air flow conduit, a dust collection motor positioned in the docking station and configured to draw air from the inside of the mobile robot through the air flow conduit and the dust collection conduit, and a dust collection filter surrounding the dust collection motor and configured to collect dust from the drawn air.

The mobile robot may include a body including a traveling unit and a control box positioned in the body and having electronic components mounted therein and a plurality of holes formed in the front surface thereof. The air flow conduit may be positioned between the front surface of the body and the front surface of the control box so as to be movable in a forward-backward direction, and may move backward when one end of the air flow conduit is coupled to the dust collection conduit, such that the other end of the air flow conduit is brought into close contact with the front surface of the control box.

The apparatus may include a first guide pin protruding from an edge of the front surface of the control box and an elastic member positioned on the first guide pin. The air flow conduit may include a first guide hole formed in the other end thereof, into which the first guide pin is inserted and with which the elastic member is in contact.

The air flow conduit may include a rubber member formed along a circumference of the other end thereof.

The body may include a support bracket configured to support a lower portion of the air flow conduit to prevent movement of the air flow conduit in a leftward-rightward direction perpendicular to the forward-backward direction.

The support bracket may include a second guide hole formed therein in the forward-backward direction, and the air flow conduit may include a second guide pin formed on the lower portion thereof and inserted into the second guide hole.

The apparatus may include at least one blower positioned on the front surface of the control box.

The docking station may include an outlet positioned on the upper surface thereof, through which air with dust removed by the dust collection filter is discharged, and the dust collection motor may discharge the air with dust removed through the outlet.

### ADVANTAGEOUS EFFECTS

The docking station, the mobile robot, and the apparatus including the same according to the present disclosure may remove dust from the inside of the mobile robot by drawing air through a dust collection motor of the docking station in a state in which a dust collection conduit of the docking station is coupled to an air flow conduit of the mobile robot.

In addition, the docking station may perform air purification by collecting dust from drawn air using a dust collection filter and discharging air from which dust has been removed to the outside through the dust collection motor.

Effects obtainable from the present embodiments are not limited by the above mentioned effects, and other unmentioned effects can be clearly understood from the above description by those having ordinary skill in the technical field to which the present disclosure pertains.

### DESCRIPTION OF DRAWINGS

FIG. 1 is a diagram illustrating a cloud system based on a 5G network according to an embodiment of the present disclosure.
FIG. 2 is a block diagram illustrating a configuration of a mobile robot according to an embodiment of the present disclosure.
FIG. 3 is a diagram illustrating a robot control system according to an embodiment of the present disclosure.
FIG. 4 is a view showing a docking station and a body of the mobile robot according to an embodiment of the present disclosure.
FIG. 5 is a view showing the inside of the body of the mobile robot according to an embodiment of the present disclosure.
FIG. 6 is a view showing an air flow conduit of the mobile robot according to an embodiment of the present disclosure.
FIG. 7 is a cross-sectional view showing a state before the docking station and the mobile robot according to an embodiment of the present disclosure are docked.
FIG. 8 is a cross-sectional view showing a state in which the docking station and the mobile robot according to an embodiment of the present disclosure are docked.
FIGs. 9 and 10 are views for describing a support bracket supporting a lower portion of the air flow conduit in the mobile robot according to an embodiment of the present disclosure.
FIG. 11 is a perspective view showing the air flow conduit of the mobile robot according to an embodiment of the present disclosure.
FIG. 12 is a view for describing discharge of internal air through the air flow conduit in the mobile robot according to an embodiment of the present disclosure.

### BEST MODE FOR DISCLOSURE

Description will now be given in detail according to exemplary embodiments disclosed herein, with reference to the accompanying drawings. For the sake of brief description with reference to the drawings, the same or equivalent components may be provided with the same reference numbers, and description thereof will not be repeated. In general, a suffix such as "module" and "unit" may be used to refer to elements or components. Use of such a suffix herein is merely intended to facilitate description of the specification, and the suffix itself is not intended to give any special meaning or function. In the present disclosure, that which is well-known to one of ordinary skill in the relevant art has generally been omitted for the sake of brevity. The accompanying drawings are used to help easily understand various technical features and it should be understood that the embodiments presented herein are not limited by the accompanying drawings. As such, the present disclosure should be construed to extend to any alterations, equivalents and substitutes in addition to those which are particularly set out in the accompanying drawings.

It will be understood that although the terms first, second, etc. may be used herein to describe various elements, these elements should not be limited by these terms. These terms are generally only used to distinguish one element from another.

It will be understood that when an element is referred to as being "connected with" another element, the element may be directly connected with the other element or intervening elements may also be present. In contrast, when an element is referred to as being "directly connected with" another element, there are no intervening elements present.

A singular representation may include a plural representation unless it represents a definitely different meaning from the context.

Terms such as "include" or "has" are used herein and should be understood that they are intended to indicate an existence of several components, functions or steps, disclosed in the specification, and it is also understood that greater or fewer components, functions, or steps may likewise be utilized.

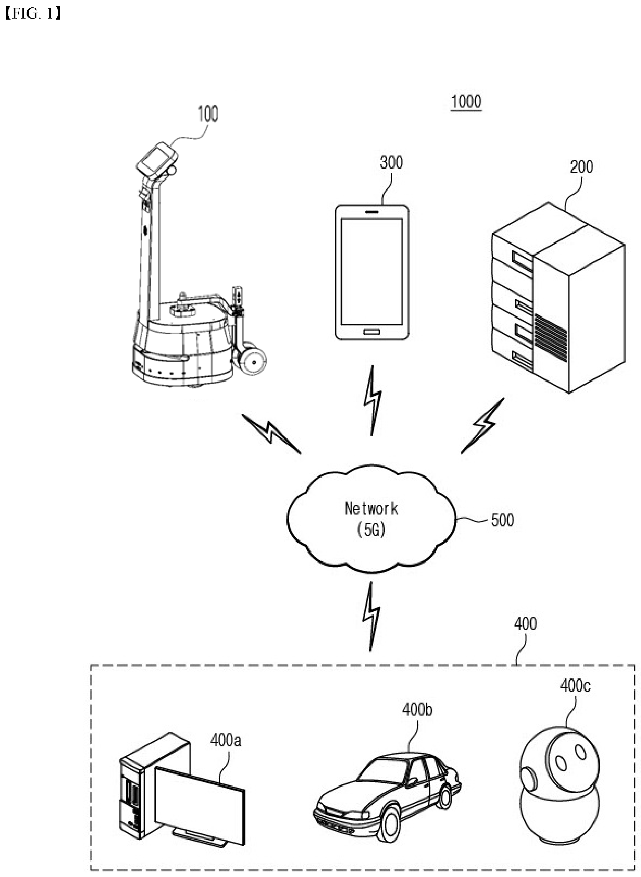

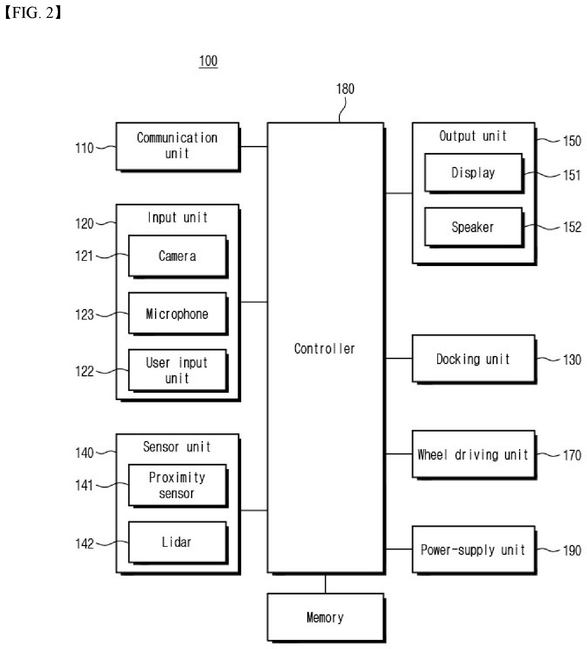

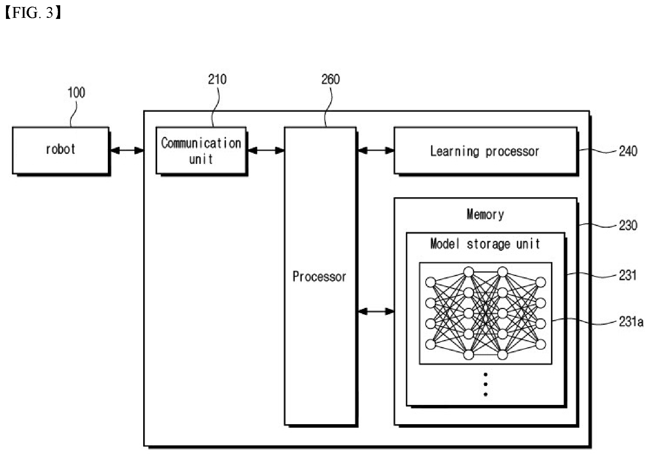

FIG. 1 is a diagram illustrating a cloud system 1000 based on a 5G network according to an embodiment of the present disclosure. FIG. 2 is a block diagram illustrating appearance of a mobile robot 100 according to an embodiment of the present disclosure. FIG. 3 is a diagram illustrating a robot control system 200 according to an embodiment of the present disclosure.

FIG. 1 is a diagram illustrating a cloud system 1000 based on a 5G network according to an embodiment of the present disclosure.

Referring to FIG. 1, the cloud system 1000 may include a mobile robot 100, a mobile terminal 300, a robot control system 200, various devices 400, and a 5G network 500.

The mobile robot 100 is a robot that transports goods (articles) from a departure point to a destination. The mobile robot 100 can move directly from a logistics center to a destination. Alternatively, after the mobile robot is loaded on a vehicle at the logistics center and is then delivered to the vicinity of the destination by the vehicle, the mobile robot is unloaded from the vehicle and then moves to the destination.

In addition, the mobile robot 100 may move articles to the destination not only outdoors but also indoors. The mobile robot 100 can be implemented as an AGV, and the AGV may be a transport device that moves by a sensor, a magnetic field, a vision device, etc. on the floor.

The mobile robot 100 may include a storage area for storing articles therein, the storage area may be divided into a plurality of partial storage areas to load various articles, and various types of articles may be placed in the partial storage areas. Accordingly, mixing of articles can be prevented.

The mobile terminal 300 may communicate with the mobile robot 100 via the 5G network 500. The mobile terminal 300 may be a device carried by a user who installs a partition in the storage area to load articles, or may be a device carried by a recipient of the loaded articles. The mobile terminal 300 may provide information based on images, and the mobile terminal 300 may include mobile devices such as a mobile phone, a smartphone, a wearable device (e.g., a watch-type terminal, a glass-type terminal, an HMD).

The robot control system 200 may remotely control the mobile robot 100 and respond to various requests of the mobile robot 100. For example, the robot control system 200 may perform calculations using artificial intelligence (AI) based on the request from the mobile robot 100.

In addition, the robot control system 200 may determine a movement path of the mobile robot 100. When there is a plurality of destinations, the robot control system 200 may determine the order of the destinations when there are multiple destinations.

The various devices 400 may include a personal computer (PC) 400a, an autonomous vehicle 400b, a home robot 400c, etc. When the mobile robot 100 arrives at the transport destination of the articles, the mobile robot 100 can directly deliver the articles to the home robot 400c through communication with the home robot 400c.

The various devices 400 may be connected to the mobile robot 100, the mobile terminal 300, the robot control system 200, etc., via the 5G network 500 by wire or wirelessly.

The mobile robot 100, the mobile terminal 300, the robot control system 200, and various devices 400 are all equipped with 5G modules to transmit and receive data at a rate of 100 Mbps to 20 Gbps (or higher), so that large video files can be transmitted to various devices, and power consumption can be minimized by operating at low power. However, the transfer rate may be implemented differently depending on the embodiments.

The 5G network 500 may include a 5G mobile communication network, a short-range network, the Internet, etc., and may provide a communication environment for devices by wire or wirelessly.

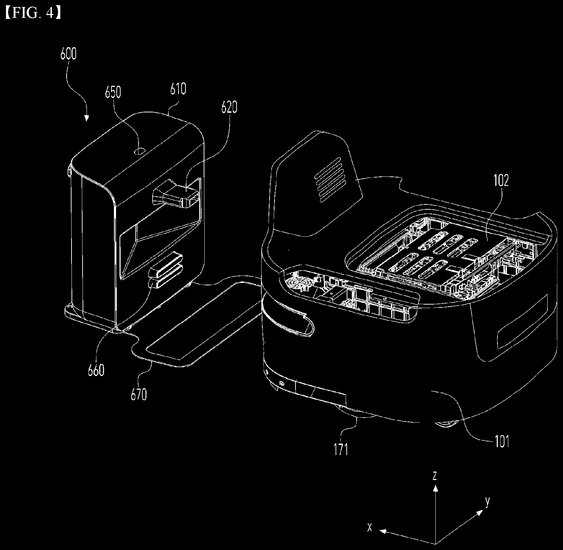

FIG. 2 is a drawing illustrating a configuration of the mobile robot 100 according to an embodiment of the present disclosure. The mobile robot 100 according to an embodiment of the present disclosure will be explained with reference to FIG. 4.

The mobile robot 100 may include a body (101, see Fig. 4) including a storage area 50, and constituent components to be described later may be included in the body. The mobile robot 100 may include a communication unit 110, an input unit 120, a sensor unit 140, an output unit 150, a memory 185, a wheel traveling unit 170, a controller 180, and a power-supply unit 190.

The constituent components shown in FIG. 2 are not always required to implement the mobile robot 100, such that it should be noted that the mobile robot 100 according to the present disclosure may include more or fewer components than the elements listed above.

The communication unit 110 may include a wired or wireless communication module capable of communicating with the robot control system 200.

As an optional embodiment, the communication unit 110 may be equipped with modules for GMS (Global System for Mobile communication), Code Division Multi Access (CDMA), Long Term Evolution (LTE), 5G, Wireless LAN (WLAN), Wireless-Fidelity (Wi-Fi), Bluetooth, Radio Frequency Identification (RFID), infrared communication (IrDA), ZigBee, Near Field Communication (and NFC) communication.

The input unit 120 may include a user input unit 122 for receiving information from a user. As an optional embodiment, the input unit 120 may include a camera 121 for inputting an image signal, and a microphone 123 (hereinafter referred to as a "microphone") for receiving an audio signal. Here, the camera 121 or the microphone 123 may be treated as a sensor, and a signal acquired from the camera 121 or the microphone 123 may be referred to as sensing data or sensor information.

The input unit 120 may acquire input data to be used when acquiring output data using learning data and a learning model for model learning. The input unit 120 may obtain unprocessed input data. In this case, the controller 180 may extract input feature points as preprocessing for the input data.

The camera 121 may be located in front to detect obstacles in front, and as shown in FIG. 3, a plurality of cameras 121 may be arranged to be different in angle. In more detail, the plurality of cameras 121 may have different capture directions, such as a camera for widely recognizing a front-view area and a camera for capturing a floor.

Alternatively, cameras with different functions may be provided. For example, a wide-angle camera, an infrared (IR) camera, etc. may be provided. The camera may serve as a sensor unit 140 for detecting surrounding objects.

The user input unit 122 may be provided with a touch panel overlapping with a button or a display 151. Alternatively, a user command may be input remotely through the communication unit 110. In this case, the user input unit 122 may include a PC 400 or a remote control device separately provided from the mobile robot 100.

Since the user input unit 122 includes all methods capable of receiving user commands, the user input unit 122 can recognize user commands through voice recognition. That is, a voice recognition device that analyzes voice collected from the microphone 123 and extracts user commands can also serve as the user input unit 122.

The input unit 120 may include an article information input unit, and the article information input unit may receive information about the article's size, information about the article's weight, destination information, information about a transport requester, etc. At this time, the article information input unit may include a code reader.

The sensor unit 140 may obtain at least one of internal information of the mobile robot 100, surrounding environment information of the mobile robot 100, and user information using various sensors.

At this time, the sensor unit 140 may include various types of sensors for recognizing the surroundings for autonomous driving. Representative examples may include a distance detection sensor or a proximity sensor 141 and a Lidar 142.

The proximity sensor 141 may include an ultrasonic sensor that recognizes nearby objects and determines the distance to the objects based on the time taken for emitted ultrasonic waves to return. A plurality of proximity sensors may be provided along the circumference, and may also be provided on an upper side to detect obstacles located on the upper side.

The Lidar 142 is a device that precisely expresses exterior appearances of the surroundings by emitting laser pulses and receiving the light that is reflected from the surrounding objects. The operation principle of the Lidar 142 is similar to that of a radar, but different electromagnetic waves are used in the Lidar 142 and the radar, so that the Lidar 142 and the radar are designed to use different technologies and different utilization ranges.

Lasers may damage human eyesight because they use light with a wavelength of 600 to 1000 nm. The Lidar 142 uses a longer wavelength than the lasers, and is used to measure not only the distance to a target object, but also a moving speed and direction, temperature, surrounding atmospheric material analysis, a concentration measurement, and the like.

In addition, the sensor unit 140 may include an illumination sensor, an acceleration sensor, a magnetic sensor, a gyro sensor, an inertial sensor, an RGB sensor, an infrared (IR) sensor, a fingerprint recognition sensor, an ultrasonic sensor, a light sensor, an optical sensor, and hall sensor etc.

The output unit 150 may generate various output signals related to visual, auditory and/or tactile sensations. The output unit 150 may include an optical output unit that outputs visual information, a display 151, etc. The output unit 150 may include a speaker 152 for outputting auditory information, an ultrasonic output unit for outputting ultrasonic signals belonging to an inaudible frequency, etc., and a haptic module for outputting tactile information.

The memory 185 may store data that supports various functions of the mobile robot 100. The memory 185 may store not only a plurality of application programs (or applications) driven by the mobile robot 100, but also data and commands required to operate the mobile robot 100.

In addition, the memory 185 may store information required to perform operations using artificial intelligence, machine learning, and artificial neural networks. The memory 185 may store a deep neural network model. The deep neural network model may be used to infer a result value for new input data rather than learning data, and the inferred value may be used as a basis of determination required to perform a certain operation.

The power-supply unit 190 may receive external power or internal power under control of the controller 180, such that the power-supply unit 190 may supply the received power to the constituent components included in the mobile robot 100. The power-supply unit 190 may include, for example, a battery. The battery 191 may be implemented as an embedded battery or a replaceable battery. The battery may be charged by a wired or wireless charging method, and the wireless charging method may include a magnetic induction method or a magnetic resonance method.

The traveling unit 170 is a means for moving the mobile robot 100, may include wheels or legs, and may include a wheel traveling unit and a leg traveling unit for controlling the wheels or legs. Referring to FIG. 4, a plurality of wheels provided on the bottom surface of the wheel traveling unit may be controlled to move the mobile robot 100 including the body.

The wheels may include a main wheel 171 for locomotion of the mobile robot 100, a caster including an axle about which the wheels rotate and a main shaft coupled to the body 101 so as to be rotatable, and an auxiliary caster for securing support force to prevent a loaded article from falling during locomotion.

The leg traveling unit (not shown) may control multiple legs according to control of the controller 180, and may thus move the body. The plurality of legs may correspond to a configuration formed so that the mobile robot 100 can walk or run. The plurality of legs may be implemented as four legs, but the scope of the present disclosure is not limited thereto. The plurality of legs may be coupled to the body to be integrally formed, and may be implemented to be detachably coupled to the body.

The mobile robot 100 may move the body through the traveling unit 170 having at least one of the wheel traveling unit and/or the leg traveling unit. However, in this specification, an example in which the wheel traveling unit is mounted on the mobile robot 100 will be mainly described.

The controller 180 is a module that controls the configurations of the mobile robot 100. The controller 180 may refer to a data processing device embedded in hardware that has a physically structured circuit to perform a function expressed by code or commands included in a program.

As an example of the data processing device embedded in hardware, this exemplary data processing device may include processing devices such as a microprocessor, a central processing unit (CPU), a processor core, a multiprocessor, an ASIC, and an FPGA, but the scope of the present disclosure is not limited thereto.

For example, the controller 180 may collect the above information through the input unit 120. The input of the input unit 120 may also include a touch input on the display. Based on the collected information, the controller 180 may transmit information on the articles (L) loaded in the loading area 50 to the mobile terminal 200 (see FIG. 1) through the communication unit 110.

Referring to FIG. 3, the robot control system 200 may include an artificial intelligence (AI) server.

The AI server may mean a device that uses a machine learning algorithm to train an artificial neural network or uses a trained artificial neural network. Here, the robot control system 200 may include a plurality of servers to perform distributed processing, and may be defined as a 5G network. At this time, the AI server may be included as a part of the configuration of the mobile robot 100, and may also enable the mobile robot 100 to perform at least a part of the AI processing.

The robot control system 200 may include a communication unit 210, a memory 230, a learning processor 240, a processor 260, etc.

The communication unit 210 may transmit and receive data to and from an external device such as the mobile robot 100.

The memory 230 may include a model storage unit 231. The model storage unit 231 may store a learning or learned model (or an artificial neural network 231a) through the learning processor 240.

The learning processor 240 may train (or learn) the artificial neural network 231a using training data (also called learning data). The learning model may be used while being loaded into the robot control system 200 of the artificial neural network, or may be loaded into an external device such as the mobile robot 100 and then used.

The learning model may be implemented as hardware, software, or a combination of hardware and software. If all or some of the learning model are implemented as software, one or more commands constituting the learning model can be stored in the memory 230.

The processor 260 may infer a result value for new input data using the learning model, and may generate a response or control command based on the inferred result value.

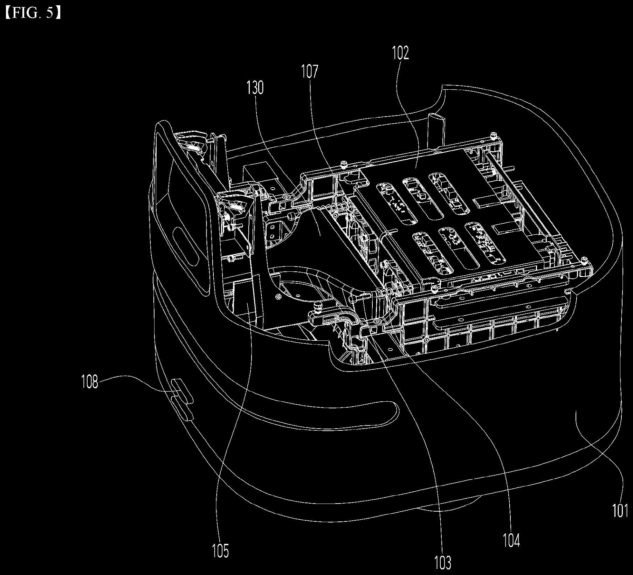

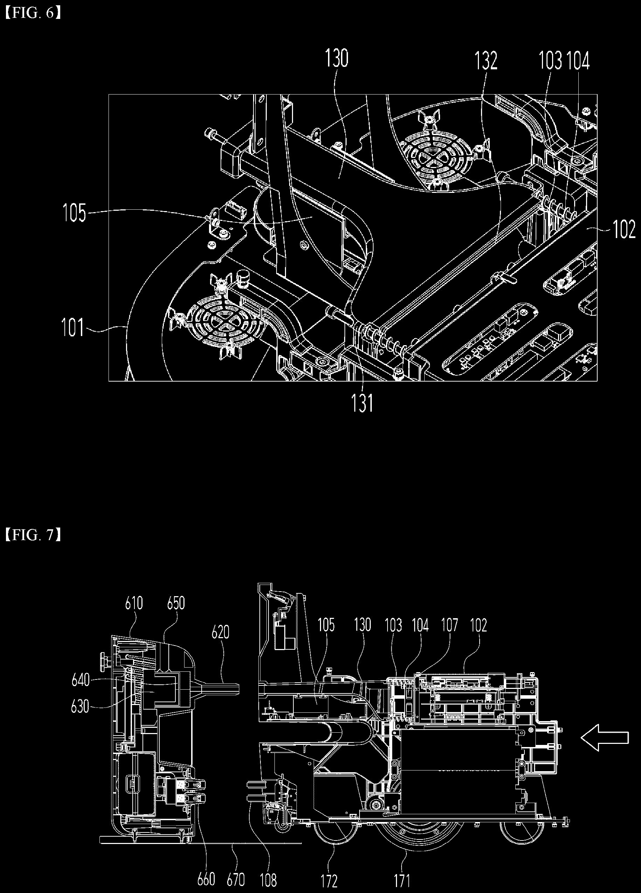

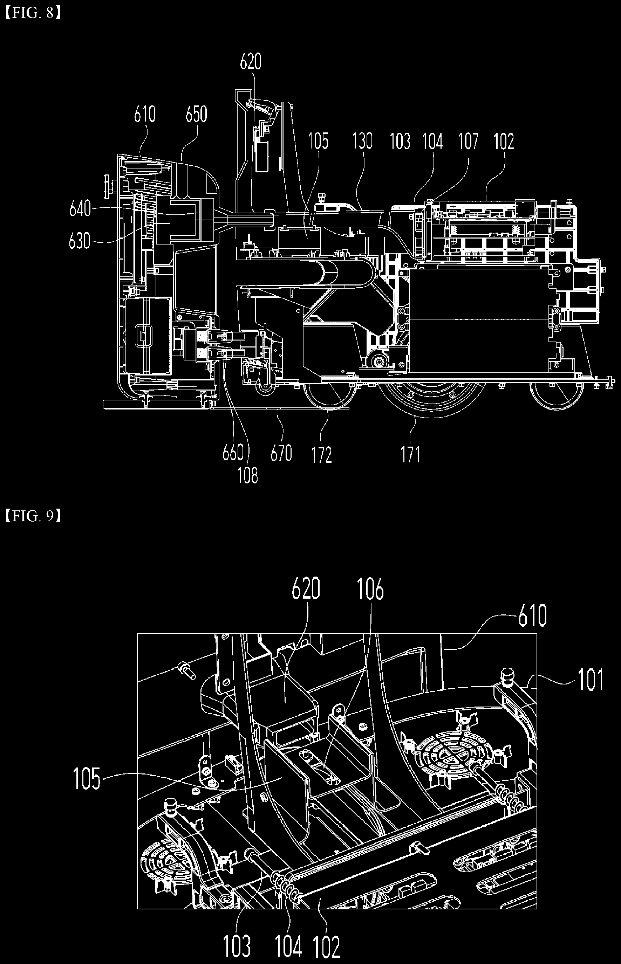

FIG. 4 is a view showing a docking station 600 and a body 101 of the mobile robot 100 according to an embodiment of the present disclosure. FIG. 5 is a view showing the inside of the body 101 of the mobile robot 100 according to an embodiment of the present disclosure. FIG. 6 is a view showing an air flow conduit 130 of the mobile robot 100 according to an embodiment of the present disclosure. FIG. 7 is a cross-sectional view showing a state before the docking station 600 and the mobile robot 100 according to an embodiment of the present disclosure are docked. FIG. 8 is a cross-sectional view showing a state in which the docking station 600 and the mobile robot 100 according to an embodiment of the present disclosure are docked.

In the following description of the docking station 600, the mobile robot 100, and an apparatus 100 and 600 including the same according to an embodiment of the present disclosure, a forward-backward direction is defined as an x-axis direction, a leftward-rightward direction is defined as a y-axis direction, and an upward-downward direction is defined as a z-axis direction.

As described above with reference to FIG. 2, the mobile robot 100 according to an embodiment of the present disclosure may move through the traveling unit 170 positioned at a lower side of the body 101. In addition, the body 101 of the mobile robot 100 may have a box shape.

Referring to FIG. 2, main wheels 171 constituting the traveling unit 170 may be connected to a motor to directly transmit driving force to the body 101, and a moving speed of the mobile robot 100 may be controlled by adjusting a speed of the motor.

In addition, a caster 172 may include an axle serving as a rotation shaft of the wheels and a main shaft disposed in a direction perpendicular to the axle and configured to rotate relative to the body 101. A moving direction of the mobile robot 100 may be controlled using the caster 172, or a traveling direction thereof may be changed by adjusting rotational speeds of left and right main wheels 171. The body 101 may be rotated in place by adjusting a direction of the caster 172, and the traveling unit 170 having such a configuration may serve to allow the mobile robot 100 to move while avoiding obstacles in a limited space.

A control box 102 in which electronic components are mounted may be positioned in the body 101 of the mobile robot 100. In addition, a plurality of holes may be formed in the front surface of the control box 102. In addition, at least one blower 107 may be positioned on the front surface of the control box 102.

In this case, the at least one blower 107 positioned on the front surface of the control box 102 may serve to cool an internal space of the control box 102 by dissipating heat generated from electronic components mounted in the control box 102. That is, the blower 107 may blow air to the internal space of the control box 102 through the plurality of holes formed in the front surface of the control box 102 in order to dissipate heat generated from the electronic components.

However, as described above, cooling based on a convection scheme using the blower 107 causes a large amount of air to be introduced from the outside. In particular, in logistics environments in which the mobile robot 100 according to an embodiment of the present disclosure is extensively used, a large amount of dust is inevitably introduced into the mobile robot 100 due to characteristics of the working environment.

In this case, dust introduced into the mobile robot 100 may accumulate in the control box 102, which may eventually lead to electrical short circuit of the electronic components. This causes an error during operation of the mobile robot 100, resulting in damage to the mobile robot 100.

Therefore, the mobile robot 100 according to an embodiment of the present disclosure is intended to discharge dust from the inside of the mobile robot 100 while the mobile robot 100 is docked with the docking station 600.

To this end, the mobile robot 100 according to an embodiment of the present disclosure may include an air flow conduit 130 positioned between the front surface of the body 101 and the front surface of the control box 102 and configured to be movable in the forward-backward direction (x-axis direction). In this case, when one end of the air flow conduit 130 is coupled to a dust collection conduit 620 positioned on the front surface of the docking station 600, the air flow conduit 130 may move backward such that the other end of the air flow conduit 130 is brought into close contact with the front surface of the control box 102. The configuration for discharging dust from the inside of the mobile robot 100 will be described in more detail later.

In addition, the docking station 600 according to an embodiment of the present disclosure may collect dust from the inside of the mobile robot 100 while the mobile robot 100 is docked with the docking station 600. The docking station 600 may include a housing 610, a dust collection conduit 620, a dust collection motor 630, and a dust collection filter 640.

The dust collection conduit 620 may be formed on the front surface of the housing 610 and may be coupled to the air flow conduit 130 positioned in the mobile robot 100. In addition, the dust collection motor 630 may be positioned in the housing 610 and may serve to draw air from the inside of the mobile robot 100 through the air flow conduit 130 and the dust collection conduit 620. In addition, the dust collection filter 640 may surround the dust collection motor 630 and may collect dust from the drawn air.

In addition, the docking station 600 according to an embodiment of the present disclosure may include an outlet 650 formed in the upper surface of the housing 610 to allow air from which dust has been removed by the dust collection filter 640 to be discharged therethrough. In addition, the dust collection motor 630 may discharge air from which dust has been removed through the outlet 650.

In this case, the dust collection filter 640 may include a high-efficiency particulate air (HEPA) filter containing activated carbon. Dust collection efficiency may be improved through the HEPA filter, and air having passed through the HEPA filter may be discharged to the outside with dust removed therefrom, as described above. Accordingly, the docking station 600, the mobile robot 100, and the apparatus 100 and 600 including the same according to an embodiment of the present disclosure may also achieve an air purification effect.

In addition, the docking station 600 according to an embodiment of the present disclosure may include a charging port 660 formed on the front surface of the housing 610 so as to be coupled to a charging terminal 108 formed on the front surface of the mobile robot 100.

That is, in the docking station 600, the mobile robot 100, and the apparatus 100 and 600 including the same according to an embodiment of the present disclosure, the mobile robot 100 may be docked with the docking station 600 for charging, and, at the same time, dust inside the mobile robot 100 may be discharged. Accordingly, there is no need to mount a separate device for removing dust from the inside of the mobile robot 100, thereby improving space utilization and reducing increase in cost.

In addition, the docking station 600 according to an embodiment of the present disclosure may include a restraining plate 670 formed at a lower portion of the housing 610 and configured to prevent movement of the mobile robot 100 in a state in which the charging terminal 108 is coupled to the charging port 660. Referring to FIG. 4, the restraining plate 670 may have a rim shape having a recess formed in the central portion thereof.

In more detail, referring to FIGs. 4, 7, and 8, the restraining plate 670 may serve to improve stability of coupling between the charging terminal 108 and the charging port 660 or coupling between the dust collection conduit 620 and the air flow conduit 130 while the mobile robot 100 is docked with the docking station 600.

Accordingly, according to an embodiment of the present disclosure, the caster of the mobile robot 100 may be seated in the recess of the restraining plate 670 described above, thereby preventing movement of the mobile robot 100. Accordingly, stability of docking between the docking station 600 and the mobile robot 100 according to an embodiment of the present disclosure may be improved, thereby facilitating charging of the mobile robot 100 and removal of dust from the inside of the mobile robot 100.

Hereinafter, a method of removing dust from the inside of the mobile robot 100 through the docking station 600 while the mobile robot 100 is docked with the docking station 600 will be described in more detail.

In the mobile robot 100 according to an embodiment of the present disclosure, as described above, when one end of the air flow conduit 130 is coupled to the dust collection conduit 620 positioned on the front surface of the docking station 600, the air flow conduit 130 may move backward such that the other end of the air flow conduit 130 is brought into close contact with the front surface of the control box 102. In addition, the dust collection motor 630 of the docking station 600 may be driven to draw air from the inside of the control box 102.

In this case, the mobile robot 100 according to an embodiment of the present disclosure may include a first guide pin 103 protruding from an edge of the front surface of the control box 102 and an elastic member 104 positioned on the first guide pin 103. In addition, the air flow conduit 130 may include a first guide hole 131 formed in the other end thereof, into which the first guide pin 103 is inserted and with which the elastic member 104 is in contact.

Referring to FIGs. 7 and 8, the air flow conduit 130 of the mobile robot 100 may be coupled to the dust collection conduit 620 of the docking station 600. As the mobile robot 100 moves forward, the air flow conduit 130 may move backward such that the other end thereof is brought into close contact with the front surface of the control box 102. In this case, the first guide pin 103, the elastic member 104, and the first guide hole 131 described above may serve to guide movement of the air flow conduit 130.

In addition, the air flow conduit 130 may include a rubber member 132 formed along a circumference of the other end thereof. Accordingly, the air flow conduit 130 may be brought into tight contact with the front surface of the control box 102 such that a gap is not formed between the other end of the air flow conduit 130 and the front surface of the control box 102. In addition, in this state, the above-described dust collection motor 630 of the docking station 600 may be driven to draw air from the inside of the control box 102.

Additionally, the mobile robot 100 according to an embodiment of the present disclosure may detect coupling between the air flow conduit 130 and the dust collection conduit 620 through the sensor unit 140 and the controller 180 described above with reference to FIG. 2. In addition, whether the other end of the air flow conduit 130 is in tight contact with the front surface of the control box 102 may be detected through the sensor unit 140 and the controller 180. In addition, the controller 180 may control the traveling unit 170 of the mobile robot 100 to move the mobile robot 100. The controller 180 may move the mobile robot 100 such that the other end of the air flow conduit 130 is brought into tight contact with the front surface of the control box 102 while the air flow conduit 130 and the dust collection conduit 620 are coupled.

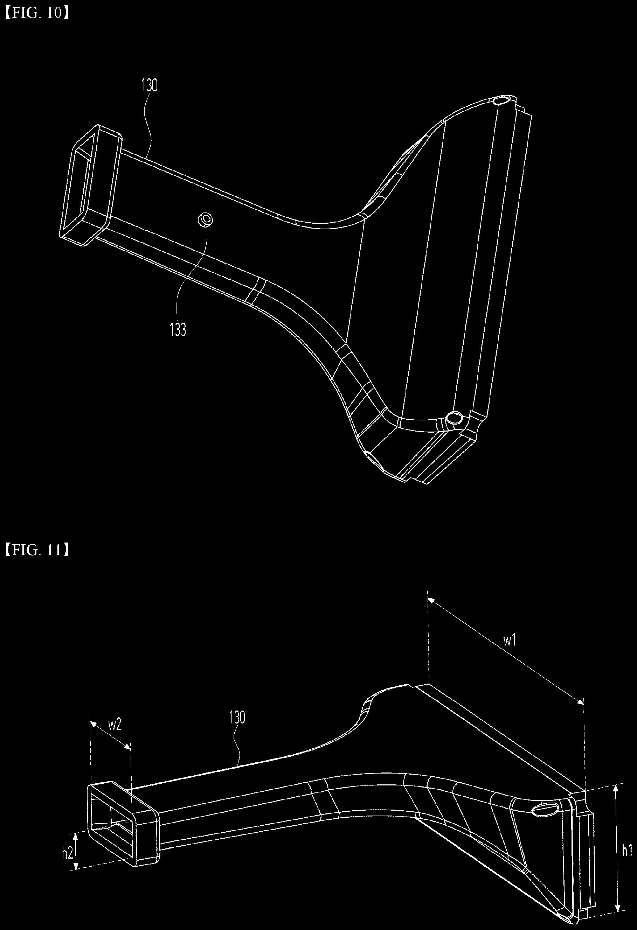

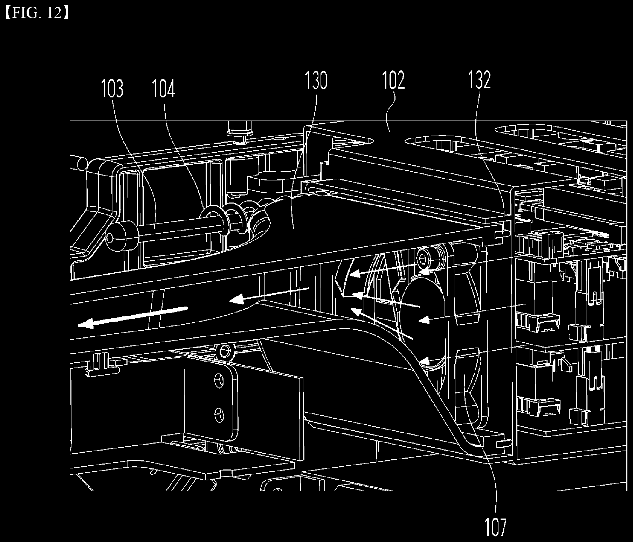

FIGs. 9 and 10 are views for describing a support bracket 105 supporting a lower portion of the air flow conduit 130 in the mobile robot 100 according to an embodiment of the present disclosure. FIG. 11 is a perspective view showing the air flow conduit 130 of the mobile robot 100 according to an embodiment of the present disclosure. FIG. 12 is a view for describing discharge of internal air through the air flow conduit 130 in the mobile robot 100 according to an embodiment of the present disclosure.

First, FIGs. 9 and 10 are views for describing the support bracket 105 supporting a lower portion of the air flow conduit 130 in the mobile robot 100 according to an embodiment of the present disclosure. FIG. 9 shows a second guide hole 106 formed in the support bracket 105 in the forward-backward direction (x-axis direction in FIG. 4), and FIG. 10 shows a second guide pin 133 formed on the lower portion of the air flow conduit 130 so as to be inserted into the second guide hole 106.

Referring to FIG. 8, in order to efficiently discharge air from the inside of the control box 102 of the mobile robot 100 while the mobile robot 100 is docked with the docking station 600, the other end of the air flow conduit 130 may need to be in tight contact with the front surface of the control box 102.

To this end, as described above, the mobile robot 100 according to an embodiment of the present disclosure may include the first guide pin 103, the elastic member 104, and the first guide hole 131 and may further include the rubber member 132 formed along a circumference of the other end of the air flow conduit 130.

In addition, in the mobile robot 100 according to an embodiment of the present disclosure, the body 101 may include a support bracket 105 supporting the lower portion of the air flow conduit 130 to prevent movement of the air flow conduit 130 in the leftward-rightward direction (y-axis direction in FIG. 4) perpendicular to the forward-backward direction (x-axis direction in FIG. 4).

In this case, the support bracket 105 may include a second guide hole 106 formed therein in the forward-backward direction (x-axis direction in FIG. 4). In addition, the air flow conduit 130 may include a second guide pin 133 formed on the lower portion thereof so as to be inserted into the second guide hole 106. Accordingly, the air flow conduit 130 may be allowed to move only in the forward-backward direction (x-axis direction in FIG. 4), and the other end of the air flow conduit 130 may be brought into tight contact with the front surface of the control box 102, as described above.

FIG. 11 is a view showing the air flow conduit 130 of the mobile robot 100 according to an embodiment of the present disclosure. More particularly, FIG. 11 is a view for describing features of the shape of the air flow conduit 130.

The air flow conduit 130 of the mobile robot 100 according to an embodiment of the present disclosure may be formed such that the width of the other end thereof is greater than the width of one end thereof. Accordingly, w1 may have a value greater than w2, and h1 may have a value greater than h2.

This is because the other end of the air flow conduit 130 is brought into close contact with the front surface of the control box 102, one end of the air flow conduit 130 is coupled to the dust collection conduit 620 of the docking station 600, and air in the control box 102 is drawn toward the dust collection conduit 620 of the docking station 600 through the air flow conduit 130.

That is, as shown in FIG. 12, the air flow conduit 130 may be formed such that the width thereof decreases from the other end thereof toward one end thereof, thereby efficiently drawing air from the inside of the control box 102.

In addition, as shown in FIG. 11, the air flow conduit 130 of the mobile robot 100 according to an embodiment of the present disclosure may be formed to have a streamlined shape, for example, an S-shape. Accordingly, flow of air may be facilitated, and air in the control box 102 may be drawn more efficiently.

Additionally, the mobile robot 100 according to an embodiment of the present disclosure may include at least one blower 107 positioned on the front surface of the control box 102. In this case, as described above, during movement of the mobile robot 100 for regular operation, the blower 107 may rotate to dissipate heat generated from the electronic components mounted in the control box 102 and may serve to cool the internal space of the control box 102 by blowing air toward the inside of the control box 102.

In addition, referring to FIG. 12, the blower 107 of the mobile robot 100 according to an embodiment of the present disclosure may serve to assist in drawing air from the inside of the control box 102. That is, the blower 107 may rotate such that air in the control box 102 is drawn into the air flow conduit 130. Accordingly, the mobile robot 100 according to an embodiment of the present disclosure may more efficiently discharge air from the inside of the control box 102 through the blower 107. In addition, rotation of the blower 107 described above may be controlled by the controller 180 described above with reference to FIG. 2.

In conclusion, the docking station, the mobile robot, and the apparatus including the same according to the present disclosure may remove dust from the inside of the mobile robot by drawing air through the dust collection motor of the docking station in a state in which the dust collection conduit of the docking station is coupled to the air flow conduit of the mobile robot. In addition, the docking station may perform air purification by collecting dust from drawn air using the dust collection filter and discharging air from which dust has been removed to the outside through the dust collection motor.

The above detailed description is not to be construed as limiting in any respect and should be considered exemplary. The scope of the disclosure is to be determined by a reasonable interpretation of the appended claims, and all changes within the equivalents of the disclosure are included in the scope of the disclosure.

## Claims

1. A docking station configured to collect dust from an inside of a mobile robot while the mobile robot is docked with the docking station, the docking station comprising:
a housing;
a dust collection conduit formed on a front surface of the housing so as to be coupled to an air flow conduit positioned in the mobile robot;
a dust collection motor positioned in the housing, the dust collection motor being configured to draw air from the inside of the mobile robot through the air flow conduit and the dust collection conduit; and
a dust collection filter surrounding the dust collection motor, the dust collection filter being configured to collect dust from the drawn air.

2. The docking station of claim 1, comprising an outlet formed in an upper surface of the housing, air with dust removed by the dust collection filter being discharged through the outlet,
wherein the dust collection motor discharges the air with dust removed through the outlet.

3. The docking station of claim 2, wherein the dust collection filter comprises a high-efficiency particulate air (HEPA) filter containing activated carbon.

4. The docking station of claim 1, comprising:
a charging port formed on the front surface of the housing so as to be coupled to a charging terminal formed on a front surface of the mobile robot; and
a restraining plate formed at a lower portion of the housing, the restraining plate being configured to prevent movement of the mobile robot while the charging terminal and the charging port are coupled.

5. A mobile robot configured to be docked with a docking station in order to discharge dust from an inside of the mobile robot, the mobile robot comprising:
a body comprising a traveling unit;
a control box positioned in the body, the control box having electronic components mounted in the control box and a plurality of holes formed in a front surface of the control box; and
an air flow conduit positioned between a front surface of the body and the front surface of the control box so as to be movable in a forward-backward direction,
wherein the air flow conduit moves backward when one end of the air flow conduit is coupled to a dust collection conduit positioned on a front surface of the docking station, such that the other end of the air flow conduit is brought into close contact with the front surface of the control box.

6. The mobile robot of claim 5, comprising:
a first guide pin protruding from an edge of the front surface of the control box; and
an elastic member positioned on the first guide pin,
wherein the air flow conduit comprises a first guide hole formed in the other end of the air flow conduit, the first guide pin being inserted into the first guide hole, the elastic member being in contact with the first guide hole.

7. The mobile robot of claim 5, wherein the air flow conduit comprises a rubber member formed along a circumference of the other end of the air flow conduit.

8. The mobile robot of claim 5, wherein the body comprises a support bracket configured to support a lower portion of the air flow conduit to prevent movement of the air flow conduit in a leftward-rightward direction perpendicular to the forward-backward direction.

9. The mobile robot of claim 8, wherein the support bracket comprises a second guide hole formed in the support bracket in the forward-backward direction, and
the air flow conduit comprises a second guide pin formed on the lower portion of the air flow conduit and inserted into the second guide hole.

10. The mobile robot of claim 5, wherein the other end of the air flow conduit has a larger width than the one end of the air flow conduit.

11. The mobile robot of claim 5, comprising at least one blower positioned on the front surface of the control box.

12. The mobile robot of claim 5, wherein the body comprises a charging terminal formed on the front surface of the body so as to be coupled to a charging port positioned on the front surface of the docking station, and is prevented from moving by a restraining plate positioned at a lower portion of the docking station while the charging port and the charging terminal are coupled.

13. An apparatus configured to remove dust from an inside of a mobile robot while the mobile robot is docked with a docking station, the apparatus comprising:
an air flow conduit positioned in the mobile robot;
a dust collection conduit positioned on a front surface of the docking station so as to be coupled to the air flow conduit;
a dust collection motor positioned in the docking station, the dust collection motor being configured to draw air from the inside of the mobile robot through the air flow conduit and the dust collection conduit; and
a dust collection filter surrounding the dust collection motor, the dust collection filter being configured to collect dust from the drawn air.

14. The apparatus of claim 13, wherein the mobile robot comprises:
a body comprising a traveling unit; and
a control box positioned in the body, the control box having electronic components mounted in the control box and a plurality of holes formed in a front surface of the control box,
wherein the air flow conduit is positioned between a front surface of the body and the front surface of the control box so as to be movable in a forward-backward direction, and moves backward when one end of the air flow conduit is coupled to the dust collection conduit, such that the other end of the air flow conduit is brought into close contact with the front surface of the control box.

15. The apparatus of claim 14, comprising:
a first guide pin protruding from an edge of the front surface of the control box; and
an elastic member positioned on the first guide pin,
wherein the air flow conduit comprises a first guide hole formed in the other end of the air flow conduit, the first guide pin being inserted into the first guide hole, the elastic member being in contact with the first guide hole.

16. The apparatus of claim 14, wherein the air flow conduit comprises a rubber member formed along a circumference of the other end of the air flow conduit.

17. The apparatus of claim 14, wherein the body comprises a support bracket configured to support a lower portion of the air flow conduit to prevent movement of the air flow conduit in a leftward-rightward direction perpendicular to the forward-backward direction.

18. The apparatus of claim 17, wherein the support bracket comprises a second guide hole formed in the support bracket in the forward-backward direction, and
the air flow conduit comprises a second guide pin formed on the lower portion of the air flow conduit and inserted into the second guide hole.

19. The apparatus of claim 14, comprising at least one blower positioned on the front surface of the control box.

20. The apparatus of claim 13, wherein the docking station comprises an outlet positioned on an upper surface of the docking station, air with dust removed by the dust collection filter being discharged through the outlet, and
the dust collection motor discharges the air with dust removed through the outlet.
